# EUROPÄISCHE PATENTSCHRIFT

(11) **EP 3 503 777 B1**
(45) Veröffentlichungstag und Bekanntmachung des Hinweises auf die Patenterteilung: **11.10.2023**
(21) Anmeldenummer: 17752056.6
(22) Anmeldetag: 03.08.2017
(51) Int. Cl.: A47J 43/07, A47J 43/25

(54) **BEARBEITUNGSSCHEIBE MIT AUSWÄHLBAREN WERKZEUGBEREICHEN**
PROCESSING DISK HAVING SELECTABLE TOOL REGIONS
DISQUE DE TRAITEMENT POURVU DE ZONES D'OUTIL SÉLECTIONNABLES

(30) Priorität: 26.08.2016 DE 102016216106
(43) Veröffentlichungstag der Anmeldung: 03.07.2019
(73) Patentinhaber: BSH Hausgeräte GmbH, 81739 München (DE)
(72) Erfinder: KOSCAK, Ales, 6230 Postojna (SI); ORBANIC, Henri, 1000 Ljubljana (SI); UPLAZNIK, Marko, 3312 Prebold (SI); KNEZ, Simon, 3311 Sempeter v savinjski dollini (SI); ZILNIK, Marko, 1218 Komenda (SI)
(86) Internationale Anmeldenummer: PCT/EP2017/069623
(87) Internationale Veröffentlichungsnummer: WO 2018/036777

(56) Entgegenhaltungen:
- EP-A1- 2 636 344
- WO-A1-2004/054418
- DE-A1-102010 041 531
- US-A1- 2011 100 179

## Beschreibung

### Gebiet der Erfindung

Die Erfindung betrifft eine Bearbeitungseinrichtung zum Zerkleinern von Verarbeitungsgut sowie eine Zerkleinerungsvorrichtung zum Zerkleinern von Verarbeitungsgut. Darüber hinaus betrifft die Erfindung ein Verfahren zum Auswählen mindestens eines Werkzeugbereichs bei einer Bearbeitungseinrichtung zum Zerkleinern von Verarbeitungsgut.

### Hintergrund der Erfindung

Zum Zerkleinern von Verarbeitungsgut und insbesondere zum Zerkleinern von Nahrungsmitteln ist eine Vielzahl von mechanisch und motorisch angetriebenen Zerkleinerungsvorrichtungen bekannt. Insbesondere sind eine Vielzahl von Zerkleinerungsvorrichtungen zum Raspeln, Hobeln, Schnitzeln, Schneiden oder Reiben von Nahrungsmitteln bekannt.

In der US-Patentschrift US 8 272 588 B2 ist eine in Rotation betreibbare Mandoline mit einer zurückziehbaren Schneidenabdeckung beschrieben. Die rotatorisch betriebene Mandoline zum Verarbeiten von Nahrungsmitteln umfasst ein Behältnis, einen Deckel sowie einen Bedienhebel. Das Behältnis weist einen Boden und Seitenwände auf, die sich von dem Boden aufwärts erstrecken und mit einem Flansch abschließen. Der Deckel liegt auf dem Flansch der Seitenwände des Behältnisses auf. Der Deckel weist eine Abdeckung mit einer darin angebrachten Öffnung, eine zurückschiebbare Klappe und einen Werkzeugträger auf. Die zurückschiebbare Klappe ist oberhalb der Öffnung der Abdeckung angeordnet und kann in eine erste Position und in eine zweite Position gebracht werden. Am Werkzeugträger sind eine Mehrzahl von Werkzeugen angebracht.

Der Werkzeugträger ist nahe bei der Abdeckung und der zurückschiebbaren Klappe angebracht. Der Bedienhebel ist abnehmbar mit dem Werkzeugträger verbunden, wobei durch Umstecken des Bedienhebels das jeweils verwendete Werkzeug gewechselt werden kann.

Weiterer Stand der Technik ist aus der EP 2 636 344 A1 bekannt. Diese zeigt eine Küchenmaschine mit einer Bearbeitungsscheibe, zur der in vertikaler Richtung eine Distanzscheibe zum Einstellen einer Schneidtiefe verschiebbar ist. Die Distanzscheibe hat hierzu Aussparungen, durch die Bearbeitungsscheibe mit ihren Schneiden in Abhängigkeit vom Abstand der Distanzscheibe zur Bearbeitungsscheibe eintaucht. Die Bearbeitungsscheibe hat eine einheitliche Form von Schneiden und ist mit der Distanzscheibe auf einer gemeinsamen Antriebswelle gelagert. Die WO 2004/054418 A1 offenbart eine Bearbeitungseinrichtung zum Zerkleinern von Verarbeitungsgut, welche aufweist eine Bearbeitungsscheibe mit einer Mehrzahl von unterschiedlichen Werkzeugbereichen, eine Abdeckscheibe mit mindestens einer Aussparung, wobei die Abdeckscheibe in unterschiedlichen Positionen auf der Bearbeitungsscheibe anordenbar ist, wobei die Bearbeitungsscheibe in eine Mehrzahl von Sektoren aufgeteilt ist und in jedem der Sektoren unterschiedliche Werkzeuge angeordnet sind, wobei die Bearbeitungsscheibe und die auf der Bearbeitungsscheibe angeordnete Abdeckscheibe in ihrer jeweiligen Position zueinander eine gemeinsam antreibbare Einheit bilden, wobei in unterschiedlichen Positionen der Abdeckscheibe auf der Bearbeitungsscheibe unterschiedliche Werkzeugbereiche durch die mindestens eine Aussparung freigelegt sind und jeweils andere Werkzeugbereiche durch die Abdeckscheibe abgedeckt sind.

### Der Erfindung zugrundeliegende Aufgabe

Es ist Aufgabe der Erfindung, eine Bearbeitungseinrichtung sowie eine Zerkleinerungsvorrichtung zur Verfügung zu stellen, welche ein einfaches und schnelles Austauschen des verwendeten Werkzeuges ermöglichen. Darüber hinaus ist es Aufgabe der Erfindung, eine Bearbeitungseinrichtung sowie eine Zerkleinerungsvorrichtung zur Verfügung zu stellen, die eine Anordnung von verschiedenen Werkzeugen auf einer gemeinsamen Bearbeitungsscheibe ermöglichen.

### Erfindungsgemäße Lösung

Diese Aufgabe wird gelöst durch eine Bearbeitungsvorrichtung mit den Merkmalen des Patentanspruchs 1, durch eine Zerkleinerungsvorrichtung mit den Merkmalen des Patentanspruchs 5 und durch ein Verfahren mit den Merkmalen des Patentanspruchs 13. Die Lösung der gestellten Aufgabe gelingt durch Bereitstellen einer Bearbeitungseinrichtung zum Zerkleinern von Verarbeitungsgut, welche eine Bearbeitungsscheibe mit einer Mehrzahl von unterschiedlichen Werkzeugbereichen und eine Abdeckscheibe mit mindestens einer Aussparung aufweist, wobei die Abdeckscheibe in unterschiedlichen Positionen auf der Bearbeitungsscheibe anordenbar ist. Dabei bilden die Bearbeitungsscheibe und die auf der Bearbeitungsscheibe angeordnete Abdeckscheibe in ihrer jeweiligen Position zueinander eine gemeinsam antreibbare Einheit.

Auf der Bearbeitungsscheibe sind zwei oder mehrere unterschiedliche Werkzeuge für die Zerkleinerung des Verarbeitungsguts angeordnet. Die Abdeckscheibe kann relativ zur Bearbeitungsscheibe in einer von mehreren möglichen Positionen angeordnet werden, wobei in unterschiedlichen Positionen unterschiedliche Werkzeuge der Bearbeitungsscheibe freigelegt sind. Auf diese Weise kann durch die Positionierung der Abdeckscheibe relativ zur Bearbeitungsscheibe das jeweils benötigte Werkzeug ausgewählt werden, welches dann durch die Aussparung hindurch nach außen freiliegt.

Die Bearbeitungsscheibe bildet zusammen mit der Abdeckscheibe eine Einheit, die als Einheit antreibbar und bewegbar ist. Dabei wird das Verarbeitungsgut durch die Bewegung des freiliegenden Werkzeugs relativ zum Verarbeitungsgut zerkleinert, während die anderen Werkzeuge, die durch die Abdeckscheibe abgedeckt werden, nicht zur Zerkleinerung des Verarbeitungsguts beitragen.

Die Bearbeitungseinrichtung hat den Vorteil, dass auf einer einzigen Bearbeitungsscheibe eine Mehrzahl von unterschiedlichen Werkzeugen zur Verfügung gestellt werden kann, aus denen der Benutzer das jeweils benötigte Werkzeug durch geeignete Positionierung der Abdeckscheibe auswählen kann. Bei bisherigen Lösungen des Stands der Technik waren jeweils verschiedene auswechselbare Bearbeitungsscheiben erforderlich oder es wurden unterschiedliche Werkzeugeinsätze für die Bearbeitungsscheibe verwendet. Bei der vorliegenden Bearbeitungseinrichtung kommt man hingegen mit einer einzigen Bearbeitungsscheibe aus, sodass das Auswechseln der Bearbeitungsscheiben und das Aufbewahren von mehreren unterschiedlichen Bearbeitungsscheiben entfällt. Die Menge an benötigtem Zubehör für die Zerkleinerungsvorrichtung wird verringert; es muss nicht mehr so viel Zubehör aufbewahrt werden. Die Auswahl des für den jeweiligen Zerkleinerungsvorgang benötigten Werkzeugs gestaltet sich denkbar einfach. Die Bearbeitungsscheibe wird in die Zerkleinerungsvorrichtung eingesetzt und anschließend wird durch geeignete Positionierung der Abdeckscheibe das benötigte Zerkleinerungswerkzeug ausgewählt. Zum Wechseln von einem Werkzeug zu einem anderen Werkzeug ist es lediglich erforderlich, die Abdeckscheibe abzunehmen und anschließend gegenüber der Bearbeitungsscheibe so zu positionieren, dass das jetzt benötigte Werkzeug durch die Aussparung der Abdeckscheibe freigelegt ist. Insofern kann durch einfaches Umpositionieren der Abdeckscheibe von einem Werkzeug zu einem anderen Werkzeug gewechselt werden. Falls die Bearbeitungsscheibe sowohl an der Oberseite als auch an der Unterseite Werkzeugbereiche aufweist, kann die Bearbeitungsscheibe beispielsweise auch relativ zur Abdeckscheibe umgedreht werden, um so die auf der anderen Seite der Bearbeitungsscheibe angeordneten Werkzeuge nutzen zu können.

Eine erfindungsgemäße Zerkleinerungsvorrichtung zum Zerkleinern von Verarbeitungsgut umfasst eine Bearbeitungsscheibe mit einer Mehrzahl von unterschiedlichen Werkzeugbereichen, eine Abdeckscheibe mit mindestens einer Aussparung, wobei die Abdeckscheibe in unterschiedlichen Positionen auf der Bearbeitungsscheibe anordenbar ist, und eine Antriebswelle, die dazu ausgebildet ist, die Bearbeitungsscheibe und die auf der Bearbeitungsscheibe angeordnete Abdeckscheibe gemeinsam anzutreiben.

In der Zerkleinerungsvorrichtung werden sowohl die Bearbeitungsscheibe als auch die Abdeckscheibe durch eine gemeinsame Antriebswelle angetrieben, wobei die Abdeckscheibe in unterschiedlichen Winkelpositionen relativ zur Bearbeitungsscheibe angeordnet sein kann. Insofern ist durch Auswahl der relativen Position zwischen Abdeckscheibe und Bearbeitungsscheibe festlegbar, welches Werkzeug zur Zerkleinerung des Verarbeitungsguts verwendet werden soll. Dabei wird die Aussparung der Abdeckscheibe so über dem ausgewählten Werkzeug positioniert, dass das ausgewählte Werkzeug durch die Aussparung hindurch freigelegt ist. Die Bearbeitungsscheibe und die Abdeckscheibe werden als Einheit durch die Antriebswelle rotierend angetrieben. Dabei wird das Verarbeitungsgut durch das freiliegende Werkzeug zerkleinert, wohingegen die durch die Abdeckscheibe abgedeckten Werkzeuge nicht zur Zerkleinerung des Verarbeitungsguts beitragen. Die Auswahl des benötigten Werkzeugs erfolgt hier durch Aufbringen der Abdeckscheibe in einer von mehreren möglichen Winkelpositionen relativ zur Bearbeitungsscheibe. Zum Werkzeugwechsel wird die Abdeckscheibe in eine andere Winkelposition relativ zur Bearbeitungsscheibe gebracht, was beispielsweise durch Umstecken erfolgen kann. Darüber hinaus wäre es denkbar, die Bearbeitungsscheibe umzudrehen, sodass auf der Unterseite der Abdeckscheibe angeordnete Werkzeuge zum Einsatz kommen können.

Ein erfindungsgemäßes Verfahren dient zum Auswählen mindestens eines Werkzeugbereichs bei einer Bearbeitungseinrichtung zum Zerkleinern von Verarbeitungsgut. Die Bearbeitungseinrichtung weist eine Bearbeitungsscheibe mit einer Mehrzahl von unterschiedlichen Werkzeugbereichen und eine Abdeckscheibe mit mindestens einer Aussparung auf, wobei die Abdeckscheibe in unterschiedlichen Positionen auf der Bearbeitungsscheibe anordenbar ist. Das Verfahren umfasst Aufsetzen der Abdeckscheibe auf die Bearbeitungsscheibe in einer Position dergestalt, dass der mindestens eine Werkzeugbereich durch die mindestens eine Aussparung freigelegt ist und mindestens ein anderer Werkzeugbereich durch die Abdeckscheibe abgedeckt ist, und rotierendes Antreiben der Bearbeitungsscheibe und der Abdeckscheibe.

Durch das erfindungsgemäße Verfahren wird eine einfache Auswahl und ein einfacher Wechsel von verschiedenen Werkzeugen auf einer Bearbeitungsscheibe ermöglicht. Dabei kann der Benutzer sämtliche Zerkleinerungsvorgänge mit einer einzigen Bearbeitungsscheibe durchführen.

### Ausgestaltungen der Erfindung

Es sind in unterschiedlichen Positionen der Abdeckscheibe auf der Bearbeitungsscheibe unterschiedliche Werkzeugbereiche durch die mindestens eine Aussparung freigelegt und jeweils andere Werkzeugbereiche durch die Abdeckscheibe abgedeckt. Durch die Positionierung der Abdeckscheibe auf der Bearbeitungsscheibe wird eine Auswahl zwischen den verschiedenen auf der Bearbeitungsscheibe angeordneten Werkzeugen ermöglicht. Ein Wechseln des Werkzeugs ist durch Umpositionieren der Abdeckscheibe möglich.

Vorzugsweise ist in einer bestimmten Position der Abdeckscheibe auf der Bearbeitungsscheibe mindestens ein erster Werkzeugbereich durch die mindestens eine Aussparung freigelegt und zum Zerkleinern des Verarbeitungsguts einsetzbar und mindestens ein anderer Werkzeugbereich ist durch die Abdeckscheibe abgedeckt und trägt zur Zerkleinerung des Verarbeitungsguts nicht bei. Wenn die Abdeckscheibe in einer bestimmten Position relativ zur Bearbeitungsscheibe angeordnet ist, tragen nur die freigelegten Werkzeugbereiche zur Zerkleinerung des Verarbeitungsgutes bei. Die abgedeckten Werkzeugbereiche wirken bei der Zerkleinerung des Verarbeitungsgutes nicht mit.

Vorzugsweise stehen die Abdeckscheibe und die Bearbeitungsscheibe in ihrer jeweiligen Position miteinander in Eingriff. Die Abdeckscheibe kann in verschiedenen Positionen mit der Bearbeitungsscheibe in Eingriff kommen und deckt dabei jeweils unterschiedliche Bereiche der Bearbeitungsscheibe ab.

Vorzugsweise ist die Abdeckscheibe mit der Bearbeitungsscheibe in den unterschiedlichen Positionen verrastbar. Durch die Verrastung wird eine stabile Fixierung der Abdeckscheibe in der gewünschten Position relativ zur Bearbeitungsscheibe erzielt.

Vorzugsweise sind die Werkzeugbereiche der Bearbeitungsscheibe mit der mindestens einen Aussparung der Abdeckplatte in Eingriff bringbar. Dabei wird durch die Aussparung derjenige Werkzeugbereich erfasst, der zur Zerkleinerung des Verarbeitungsguts benötigt wird.

Vorzugsweise ist die Einheit aus der Bearbeitungsscheibe und der Abdeckscheibe rotierend antreibbar. Zur Zerkleinerung des Verarbeitungsgutes wird die Gesamtheit aus der Bearbeitungsscheibe und der Abdeckscheibe rotierend angetrieben, wobei das Verarbeitungsgut durch das jeweils freiliegende Werkzeug zerkleinert wird.

Vorzugsweise sind die Abdeckscheibe und die Bearbeitungsscheibe dazu ausgelegt, in einer bestimmten Position zueinander rotierend angetrieben zu werden. Dabei wird durch die Relativposition zwischen der Abdeckscheibe und der Bearbeitungsscheibe das Werkzeug ausgewählt, das zur Zerkleinerung des Verarbeitungsguts verwendet werden soll. In dieser Position der Abdeckscheibe relativ zur Bearbeitungsscheibe wird die Gesamtheit aus Abdeckscheibe und Bearbeitungsscheibe dann rotierend angetrieben. Vorzugsweise sind die Abdeckscheibe und die Bearbeitungsscheibe dazu ausgelegt, um eine gemeinsame Drehachse rotierend angetrieben zu werden.

Vorzugsweise ist die Bearbeitungsscheibe einstückig ausgebildet. Vorzugsweise besteht die Bearbeitungsscheibe aus Edelstahl. Sämtliche Werkzeugbereiche und Werkzeuge können auf einer Bearbeitungsscheibe untergebracht werden. Dabei ist es von Vorteil, Edelstahl als Material für die Bearbeitungsscheibe zu verwenden, um die für die Werkzeuge benötigten Klingen und Schneiden aus Edelstahl fertigen zu können.

Vorzugsweise umfasst die Bearbeitungsscheibe ein Trägerelement und mehrere durch das Trägerelement gehalterte Werkzeugeinsätze. Vorzugsweise bestehen das Trägerelement aus Kunststoff und die Werkzeugeinsätze aus Edelstahl. Für die Werkzeugeinsätze ist die Verwendung von Edelstahl vorteilhaft, um die Klingen und Schneiden der Werkzeuge fertigen zu können. Das Trägerelement dagegen kann auch aus Kunststoff gefertigt werden.

Die Bearbeitungsscheibe ist als beidseitig verwendbare Bearbeitungsscheibe ausgebildet, die auf beiden Seiten Werkzeugbereiche aufweist. Sowohl an der Oberseite als auch an der Unterseite der Bearbeitungsscheibe sind Werkzeuge angeordnet.

Dadurch können auf einer einzigen Bearbeitungsscheibe eine Vielzahl von unterschiedlichen Werkzeugbereichen und Werkzeugen untergebracht werden, aus denen der Benutzer dann das gerade benötigte Werkzeug auswählen kann. Vorzugsweise sind die unterschiedlichen Werkzeugbereiche der Bearbeitungsscheibe zu einem oder mehreren von folgenden ausgebildet: Schneiden, Hobeln, Raspeln, Reiben, Schnitzeln von Verarbeitungsgut. Auf der Bearbeitungsscheibe können sämtliche gängige Zerkleinerungswerkzeuge und Zerkleinerungstechniken zur Verfügung gestellt werden.

Die Bearbeitungsscheibe ist in eine Mehrzahl von Sektoren für unterschiedliche Werkzeugbereiche unterteilt. Vorzugsweise entspricht die mindestens eine Aussparung der Abdeckscheibe in ihrer Form einem Sektor der Bearbeitungsscheibe. Durch die Aussparung der Abdeckscheibe wird mindestens ein Sektor der Bearbeitungsscheibe freigelegt, so dass das dort angebrachte Werkzeug zur Zerkleinerung des Verarbeitungsgutes einsetzbar ist.

Die Zerkleinerungsvorrichtung umfasst eine Antriebswelle. Vorzugsweise weist die Antriebswelle zumindest abschnittsweise ein Passungsprofil auf und mindestens eine von der Bearbeitungsscheibe und der Abdeckscheibe weist eine Passungsaufnahme auf, die zu dem Passungsprofil der Antriebswelle komplementär ausgebildet ist. Sowohl die Bearbeitungsscheibe als auch die Abdeckscheibe können auf die Antriebswelle aufgeschoben beziehungsweise aufgesteckt werden. Durch die Passungsaufnahme kommt die jeweilige Scheibe in Eingriff mit der Antriebswelle und kann durch die Antriebswelle rotierend angetrieben werden.

Vorzugsweise ist das Passungsprofil der Antriebswelle dazu ausgelegt, in die Passungsaufnahme einzugreifen. Dadurch kann die Einheit aus Abdeckscheibe und Bearbeitungsscheibe in Rotation versetzt werden.

Vorzugsweise weist mindestens eine von der Bearbeitungsscheibe und der Abdeckscheibe eine Passungsaufnahme für die Antriebswelle auf, mit der die Einheit aus der Bearbeitungsscheibe und der Abdeckscheibe rotierbar antreibbar ist. Vorzugsweise weist mindestens eine von der Bearbeitungsscheibe und der Abdeckscheibe eine Passungsaufnahme für die Antriebswelle auf, die dazu ausgebildet ist, ein Passungsprofil der Antriebswelle formschlüssig aufzunehmen. Wenn die Bearbeitungsscheibe und die Abdeckscheibe in ihrer jeweiligen Relativposition zueinander in Eingriff stehen, ist es ausreichend, wenn nur eine von Bearbeitungsscheibe und Abdeckscheibe eine Passungsaufnahme aufweist und durch die Antriebswelle angetrieben wird. Alternativ dazu können auch beide Scheiben, also sowohl die Abdeckscheibe als auch die Bearbeitungsscheibe eine Passungsaufnahme für die Antriebswelle aufweisen.

Vorzugsweise ist die Abdeckscheibe in vordefinierten Winkelpositionen auf die Bearbeitungsscheibe aufsetzbar. Die Abdeckscheibe ist um unterschiedliche Winkel verdreht auf die Bearbeitungsscheibe aufsetzbar, um auf diese Weise unterschiedliche Werkzeugbereiche auf der Bearbeitungsscheibe auswählen zu können.

Vorzugsweise sind die vordefinierten Winkelpositionen bei einer Positionierung der Abdeckscheibe auf der Bearbeitungsscheibe durch ein Passungsprofil der Antriebswelle vorgegeben, das in eine Passungsaufnahme der Abdeckscheibe eingreift. Wenn die Antriebswelle beispielsweise ein dreieckiges Passungsprofil mit einer 120°-Symmetrie aufweist, dann kann die Passungsaufnahme der Abdeckscheibe in drei unterschiedlichen Winkelpositionen auf die Antriebswelle aufgesteckt werden. Über diese drei möglichen Winkelpositionen sind unterschiedliche Werkzeugbereiche der Bearbeitungsscheibe auswählbar.

Vorzugsweise sind die Werkzeugbereiche als Bearbeitungsflächen ausgebildet. Vorzugsweise sind die Werkzeugbereiche als Bearbeitungsflächen ausgebildet, wobei die Bearbeitungsflächen von der Mitte zum Rand der Bearbeitungsscheibe hin schräg abfallend verlaufen. Durch den schräg abfallenden Verlauf der Bearbeitungsflächen der Bearbeitungsscheibe wird die Möglichkeit geschaffen, die Bearbeitungsscheibe bei der Auswahl eines Werkzeugbereichs so zu verkippen, dass die zugehörige schräg abfallende Bearbeitungsfläche in die Horizontale gekippt wird, was die Zerkleinerung des Verarbeitungsgutes erleichtert. Bei dieser Verkippung werden die nicht benötigten Werkzeuge von der Bearbeitungsebene weggedreht. Vorzugsweise sind die Werkzeugbereiche als Bearbeitungsflächen ausgebildet, wobei die Bearbeitungsflächen von der Mitte zum Rand der Bearbeitungsscheibe hin schräg abfallend in einem Winkel zwischen 2° und 30° zur Horizontalen verlaufen.

Vorzugsweise ist die Antriebswelle als Fortsetzung eines Antriebsschafts ausgebildet, der einen größeren Durchmesser als die Antriebswelle aufweist. Vorzugsweise ist an der Antriebswelle eine umlaufende gewölbte Lagerfläche ausgebildet, auf der die Bearbeitungsscheibe verkippbar gelagert ist. Vorzugsweise ist die umlaufende gewölbte Lagerfläche am Übergang zwischen der Antriebswelle und dem Antriebsschaft angeordnet. Durch die umlaufende gewölbte Lagerfläche wird eine verkippbare Lagerung der Bearbeitungsscheibe auf dieser Lagerfläche ermöglicht. Dadurch kann die Bearbeitungsscheibe so verkippt werden, dass das benötigte Werkzeug in eine horizontale Bearbeitungsebene gekippt wird, wohingegen die nicht benötigten Werkzeuge aus der horizontalen Bearbeitungsebene wegbewegt werden.

Vorzugsweise weist die umlaufend gewölbte Lagerfläche eine oder mehrere in Längsrichtung verlaufende Rippen auf, die mit entsprechenden Nuten der verkippbar gelagerten Bearbeitungsscheibe in Eingriff kommen. Durch die in Längsrichtung verlaufenden Rippen, die in entsprechende Nuten der Bearbeitungsscheibe eingreifen, kann die Bearbeitungsscheibe trotz ihrer Verkippbarkeit relativ zum Lager fixiert und stabilisiert werden.

Vorzugsweise ist die Bearbeitungsscheibe dazu ausgebildet, bei einer Positionierung der Abdeckscheibe auf der Bearbeitungsscheibe so verkippt zu werden, dass nur ein durch die mindestens eine Aussparung freigelegter Werkzeugbereich in einer Bearbeitungsebene zu liegen kommt und jeweils andere Werkzeugbereiche durch die Verkippung aus der Bearbeitungsebene herausgedreht werden. Bei der Auswahl des Werkzeugs wird die Bearbeitungsscheibe so verkippt, dass das ausgewählte Werkzeug in die horizontale Bearbeitungsebene gekippt wird. Durch die Verkippung kann das ausgewählte freiliegende Werkzeug beispielsweise in der horizontalen Lage von der Aussparung der Abdeckscheibe so umfasst werden, dass das Werkzeug mit der Aussparung der Abdeckscheibe bündig abschließt.

Vorzugsweise ist die Abdeckscheibe auf die Antriebswelle aufsteckbar. Vorzugsweise wird die Abdeckscheibe nach dem Aufsetzen der Bearbeitungsscheibe auf die Antriebswelle aufgesteckt.

Vorzugsweise handelt es sich bei der Zerkleinerungsvorrichtung um eines von folgenden: einen Multizerkleinerer, einen Durchlaufschnitzler, ein Zubehörteil für eine Küchenmaschine. Diese Aufzählung ist nicht abschließend. Die aus Abdeckscheibe und Bearbeitungsscheibe bestehende Bearbeitungsvorrichtung kann überall dort eingesetzt werden, wo Verarbeitungsgut mit Hilfe von mit Werkzeugen versehenen Scheiben zerkleinert wird.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1:: Fig. 1 zeigt eine Bearbeitungseinrichtung zum Zerkleinern von Verarbeitungsgut, die eine Bearbeitungsscheibe und eine Abdeckscheibe umfasst.
- Figur 2:: Fig. 2 zeigt die Bearbeitungsscheibe und die Abdeckscheibe im zusammengesteckten Zustand.
- Figur 3a:: Fig. 3a zeigt die Oberseite der Bearbeitungsscheibe.
- Figur 3b:: Fig. 3b zeigt die Unterseite der Bearbeitungsscheibe.
- Figur 4:: Fig. 4 zeigt einen Zerkleinerer in Schrägbilddarstellung.
- Figur 5:: Fig. 5 zeigt eine Antriebsvorrichtung für einen Zerkleinerer.
- Figur 6:: Fig. 6 zeigt den Zusammenbau des Zerkleinerers im Überblick.
- Figur 7:: Fig. 7 zeigt den gesamten Zerkleinerer im Längsschnitt.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

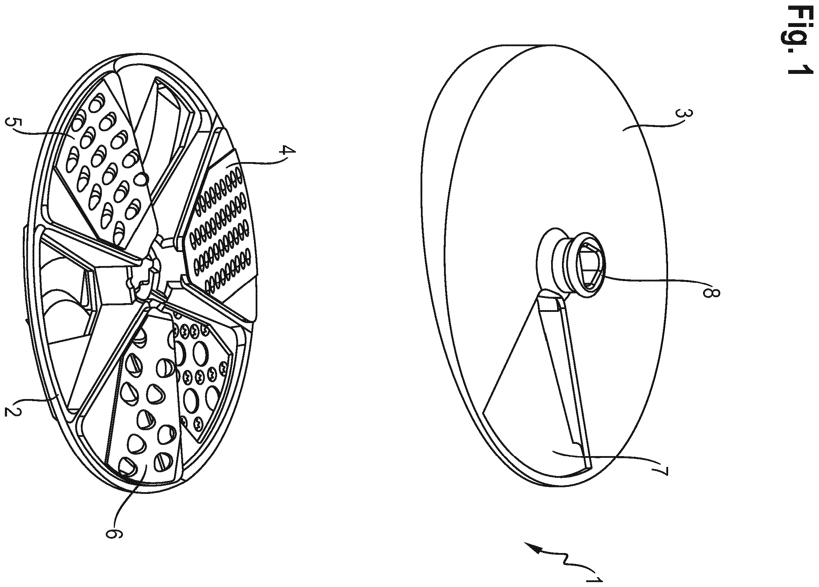

Figur 1 zeigt eine Bearbeitungseinrichtung 1 zum Zerkleinern von Verarbeitungsgut, insbesondere von Nahrungsmitteln, im Schrägbild. Die in Figur 1 gezeigte Bearbeitungseinrichtung 1 kann beispielsweise zum Reiben, Raspeln, Schnitzeln, Hobeln und Schneiden von Nahrungsmitteln eingesetzt werden. Die Bearbeitungseinrichtung 1 umfasst eine Bearbeitungsscheibe 2 mit unterschiedlichen Werkzeugbereichen sowie eine Abdeckscheibe 3, die in verschiedenen Positionen relativ zur Bearbeitungsscheibe 2 auf die Bearbeitungsscheibe 2 aufsetzbar ist. Wie in Figur 1 zu erkennen ist, ist die Bearbeitungsscheibe 2 in sechs Sektoren aufgeteilt, wobei in jedem der Sektoren unterschiedliche Werkzeuge angeordnet sind. Beispielsweise ist im Bereich des Sektors 4 ein feines Raspelwerkzeug, im Bereich des Sektors 5 ein mittelgrobes Raspelwerkzeug und im Bereich des Sektors 6 ein grobes Raspelwerkzeug angeordnet. Die Abdeckscheibe 3 weist eine sektorförmige Aussparung 7 auf, die in ihrer Form den Sektoren der Bearbeitungsscheibe 2 entspricht. Wenn die Abdeckscheibe 3 in einer bestimmten Position relativ zur Bearbeitungsscheibe 2 auf die Bearbeitungsscheibe 2 aufgesteckt wird, dann kommt die sektorförmige Aussparung 7 auf einen der Sektoren 4, 5, 6 der Bearbeitungsscheibe 2 zu liegen und ist zu diesem Sektor deckungsgleich, sodass das im jeweiligen Sektor angeordnete Werkzeug durch die Aussparung 7 hindurch von außen zugänglich ist. Auf diese Weise kann das Werkzeug in dem Sektor, der durch die Aussparung 7 hindurch frei zugänglich ist, zur Zerkleinerung von Verarbeitungsgut eingesetzt werden. Die anderen Sektoren der Bearbeitungsscheibe 2 dagegen werden durch die aufgesteckte Abdeckscheibe 3 so abgedeckt, dass sie nicht von außen zugänglich sind und somit zum Zerkleinern des Verarbeitungsguts nichts beitragen können.

Dabei kann die Abdeckscheibe 3 in verschiedenen Stellungen relativ zur Bearbeitungsscheibe 2 auf die Bearbeitungsscheibe 2 aufgesetzt werden, sodass die sektorförmige Aussparung 7 wahlweise einen der Sektoren 4, 5, 6 nach außen freilegt, während die verbleibenden Werkzeuge in den restlichen Sektoren durch die Abdeckscheibe 3 abgedeckt werden und nicht zum Zerkleinerungsprozess beitragen. Insofern kann durch geeignete Platzierung der Aussparung 7 dasjenige Werkzeug ausgewählt werden, mit dem das Verarbeitungsgut zerkleinert werden soll. Durch geeignete Positionierung der Abdeckscheibe 3 auf der Bearbeitungsscheibe 2 kann daher erreicht werden, dass einer der Sektoren 4, 5, 6 mit seinem jeweiligen Bearbeitungswerkzeug durch die Aussparung 7 freigelegt wird, sodass wahlweise die feine Reibe, die mittelgrobe Reibe oder die grobe Reibe für die Zerkleinerung des Verarbeitungsguts ausgewählt werden kann. Die gesamte aus der Bearbeitungsscheibe 2 und der darauf gesteckten Abdeckscheibe 3 bestehende Bearbeitungseinrichtung 1 wird dann mittels einer geeigneten Antriebswelle rotierend angetrieben. Im Zentrum der Abdeckscheibe 3 ist eine Passungsaufnahme 8 für die Antriebswelle angebracht. Wenn die Bearbeitungsscheibe 2 zusammen mit der Abdeckscheibe 3 auf die Antriebswelle aufgesteckt wird, kommt die Passungsaufnahme 8 im formschlüssigen Eingriff mit der Antriebswelle und kann so durch die Antriebswelle rotierend angetrieben werden. Die Bearbeitungsscheibe 2 kann ebenfalls eine Passungsaufnahme für die Antriebswelle aufweisen, kann alternativ dazu jedoch auch über die Abdeckscheibe 3 angetrieben werden, mit der sie in Eingriff steht.

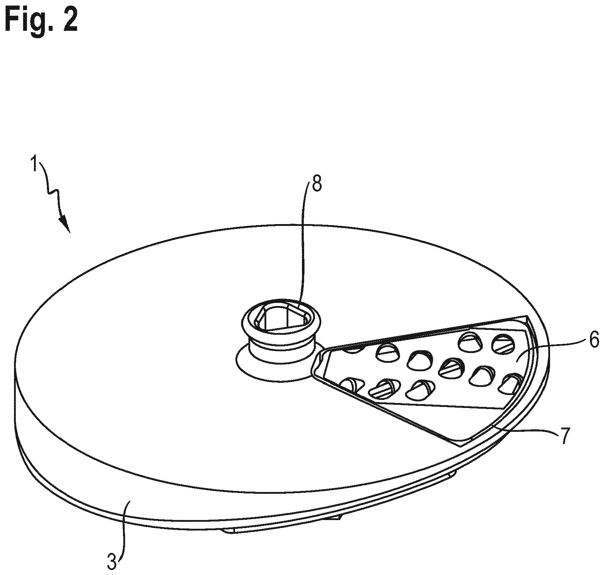

In Figur 2 ist die Bearbeitungsscheibe 2 mit der darauf aufgesteckten Abdeckscheibe 3 nochmals im zusammengesetzten Zustand gezeigt. Dabei ist die Abdeckscheibe 3 relativ zur Bearbeitungsscheibe 2 so positioniert, dass die Aussparung 7 den unmittelbar darunter befindlichen Sektor 6 nach außen hin freilegt, sodass das auf dem Sektor 6 angeordnete grobe Raspelwerkzeug von außen zugänglich ist. Dabei stimmt die Form der Aussparung 7 im Wesentlichen mit der Form der Sektoren der Bearbeitungsscheibe 2 überein. Die restlichen Sektoren und die restlichen Werkzeuge der Bearbeitungsscheibe 2 werden durch die Abdeckscheibe 3 abgedeckt und sind somit nicht von außen zugänglich. Wenn nun die in Figur 2 gezeigte Bearbeitungseinrichtung 1, die die Bearbeitungsscheibe 2 und die damit in Eingriff stehende Abdeckscheibe 3 umfasst, auf eine profilierte Antriebswelle aufgesteckt wird, dann kommt das Profil der Antriebswelle in formschlüssigen Eingriff mit der Passungsaufnahme 8 der Abdeckscheibe 3. Somit kann die gesamte Bearbeitungseinrichtung durch die Antriebswelle rotierend angetrieben werden. Dabei ist lediglich der Sektor 6 mit dem darauf angebrachten Werkzeug von außen zugänglich, sodass das von oben gegen die rotierende Bearbeitungseinrichtung gedrückte Verarbeitungsgut ausschließlich durch das grobe Raspelwerkzeug in Sektor 6 zerkleinert wird, das als einziges Werkzeug von außen zugänglich ist. Die restlichen Werkzeuge werden durch die Abdeckscheibe 3 abgedeckt und tragen zur Zerkleinerung des Verarbeitungsguts nichts bei. Insofern kann durch die Positionierung der Abdeckscheibe 3 mit der Aussparung 7 relativ zu den Sektoren der Bearbeitungsscheibe 2 dasjenige Werkzeug ausgewählt werden, dass zur Zerkleinerung des Verarbeitungsguts gerade benötigt wird. Wenn man die Bearbeitungseinrichtung 1 also in der in Figur 2 gezeigten Stellung verwendet, dann würde das Verarbeitungsgut vergleichsweise grob geraspelt werden. Zur Auswahl eines anderen Werkzeugs kann die Abdeckscheibe 3 abgesteckt und in einer anderen Position relativ zu der Bearbeitungsscheibe 2 wieder auf die Bearbeitungsscheibe 2 aufgesteckt werden. Durch die Aussparung 7 hindurch wird dann ein anderer Sektor der Bearbeitungsscheibe 2 mit einem anderen Werkzeug freigelegt, welches dann für die Zerkleinerung des Verarbeitungsguts verwendet werden kann. Auf diese Weise kann durch geeignete Positionierung der Abdeckscheibe 3 und der Aussparung 7 relativ zur Bearbeitungsscheibe 2 jedes beliebige auf der Bearbeitungsscheibe 2 angeordnete Bearbeitungswerkzeug ausgewählt und für die Zerkleinerung des Verarbeitungsguts verwendet werden.

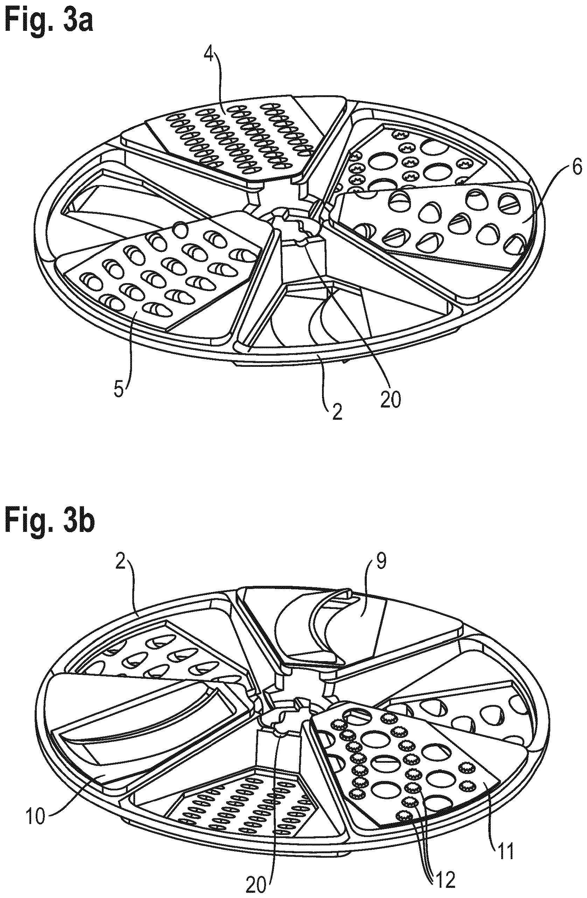

Erfindungsgemäss ist die Bearbeitungsscheibe 2 auf beiden Seiten mit Werkzeugen versehen. Eine derartige Bearbeitungsscheibe 2 ist in Figur 3a und Figur 3b gezeigt, wobei Figur 3a die Oberseite der Bearbeitungsscheibe 2 und Figur 3b die Unterseite der Bearbeitungsscheibe 2 zeigt. Die Bearbeitungsscheibe 2 ist in sechs Sektoren eingeteilt, wobei an der Oberseite die drei bereits beschriebenen Sektoren 4, 5, und 6 mit entsprechenden Bearbeitungswerkzeugen angeordnet sind. In Sektor 4 ist das feine Raspelwerkzeug, in Sektor 5 das mittelgrobe Raspelwerkzeug und in Sektor 6 das grobe Raspelwerkzeug angeordnet. Zwischen den Sektoren 4, 5 und 6 ist jeweils ein dazwischenliegender Sektor 9, 10 und 11 vorgesehen, bei dem an der Oberseite kein Werkzeug angeordnet ist. Wie anhand der Figur 3a und Figur 3b jedoch erkennbar ist, ist in den Sektoren 9, 10, 11 das jeweilige Bearbeitungswerkzeug an der Unterseite der Bearbeitungsscheibe angeordnet. Das in Sektor 9 vorgesehene Schneidwerkzeug dient dazu, das Verarbeitungsgut in vergleichsweise dicke Scheiben zu hobeln, das in Sektor 10 angeordnete Schneidwerkzeug dient dazu, das Verarbeitungsgut in vergleichsweise dünne Scheiben zu hobeln und in Sektor 11 ist eine Reibe mit einer Mehrzahl von Reibzacken 12 vorgesehen, mit denen sich beispielsweise Hartkäse wie Parmesan zerreiben lässt. Die abwechselnde Anordnung von Sektoren mit Werkzeug und Sektoren ohne Werkzeug dient dazu, den jeweils ausgewählten Sektor mit dem gewünschten Werkzeug besser in die Aussparung 7 der Abdeckscheibe 3 eindrücken zu können, sodass der jeweilige Sektor mit der Aussparung 7 in Eingriff gelangt und von der Aussparung 7 rundum umschlossen wird. Dadurch wird das durch die Aussparung 7 hindurch nach oben ragende Werkzeug plan in die Abdeckscheibe 3 integriert. Dies kann so weit gehen, dass beim Aufdrücken der Aussparung 7 auf den jeweils ausgewählten Sektor ein rastender Eingriff zwischen dem Sektor und der Aussparung 7 hergestellt wird.

Darüber hinaus ist in den Figuren 3a und 3b zu erkennen, dass sowohl an der Oberseite als auch an der Unterseite der Bearbeitungsscheibe 2 die Werkzeugflächen in den jeweiligen Sektoren einen abgeschrägten, von der Mitte zum Rand hin abfallenden Verlauf aufweisen. Die Werkzeugflächen sind daher relativ zur Horizontalen um einen Winkel ϕ geneigt angeordnet, wobei der Winkel ϕ beispielsweise zwischen 3 Grad und 30 Grad betragen kann, sodass die Winkelflächen zum Rand hin etwas nach unten geneigt verlaufen. Die Aussparung 7 der Abdeckscheibe 3 befindet sich in der Horizontalen. Wenn nun die Werkzeugfläche des Raspelwerkzeugs im Sektor 6 wie in Fig. 2 gezeigt in die Aussparung 7 gedrückt wird, dann wird die eigentlich schräg nach unten orientierte Werkzeugfläche im Sektor 6 in die horizontale Bearbeitungsebene gekippt, wodurch die gesamte Bearbeitungsscheibe 2 um den Winkel ϕ gekippt wird, sodass sie relativ zu der exakt horizontal orientieren Abdeckscheibe leicht verkippt orientiert ist. Dies hat den Vorteil, dass dadurch ein besserer Eingriff zwischen der Aussparung 7 und dem Werkzeug in Sektor 6 ermöglicht wird, wie dies in Figur 2 gut zu erkennen ist. Das Werkzeug in Sektor 6 ragt durch die Aussparung 7 hindurch nach oben und wird allseitig von der Aussparung 7 umfasst. Durch die schräge Orientierung der Werkzeugflächen und der dadurch verursachten Verkippung der Bearbeitungsscheibe 2 wird außerdem erreicht, dass die beiden nicht benötigten Werkzeuge in den Sektoren 4 und 5 infolge der schrägen Orientierung der Bearbeitungsscheibe 2 aus der Bearbeitungsebene herausgedreht werden und schräg nach unten abstehen, sodass sie in dieser Position keinen Einfluss auf die Zerkleinerung des Verarbeitungsguts haben. Die Zerkleinerung des Verarbeitungsguts wird allein durch das in die Bearbeitungsebene gekippte Werkzeug des Sektors 6 durchgeführt. Durch die schräg orientierten Werkzeugflächen wird daher erreicht, dass die nicht benötigten Werkzeuge aus der Bearbeitungsebene herausgedreht werden und somit nicht mehr stören.

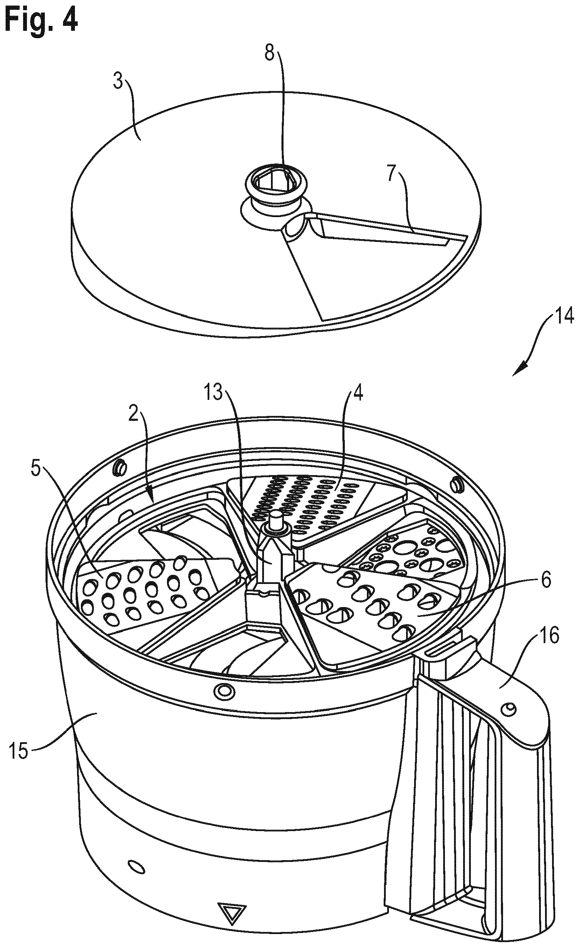

In Figur 4 ist gezeigt, wie die Bearbeitungsscheibe 2 und die Abdeckscheibe 3 nacheinander auf eine Antriebswelle 13 eines Zerkleinerers 14 aufgesteckt werden. Bei dem in Figur 4 gezeigten Beispiel weist die Antriebswelle 13 ein im Wesentlichen dreieckiges Passungsprofil auf, das in die hierzu komplementäre Passungsaufnahme 8 der Abdeckscheibe 3 eingreift. Daraus ergibt sich, dass die Abdeckscheibe 3 in drei verschiedenen Winkelpositionen auf die Antriebswelle 13 aufsteckbar ist, wobei die Abdeckscheibe 3 zwischen zwei aufeinander folgenden möglichen Winkelpositionen jeweils um 120 Grad weitergedreht wird. Insofern kann die Abdeckscheibe 3 in drei möglichen Stellungen relativ zur Bearbeitungsscheibe 2 auf die Bearbeitungsscheibe 2 aufgesteckt werden, wobei in der ersten möglichen Winkelposition die Aussparung 7 oberhalb des Werkzeugs in Sektor 4 angeordnet ist, wobei in der zweiten möglichen Winkelposition die Aussparung 7 oberhalb des Werkzeugs in Sektor 5 angeordnet ist, und wobei in der dritten möglichen Winkelposition das Werkzeug in Sektor 6 durch die Aussparung 7 hindurch zugänglich gemacht wird.

Insofern kann über die Winkelposition zwischen der Abdeckscheibe 3 und der Bearbeitungsscheibe 2 das jeweilige Werkzeug ausgewählt werden, mit dem die Bearbeitung des Verarbeitungsguts erfolgen soll. Der Benutzer kann durch einfaches Umstecken der Abdeckscheibe 3 zwischen verschiedenen Werkzeugen wechseln und beispielsweise von einem groben Raspelwerkzeug zu einem feineren Raspelwerkzeug übergehen. Bei der erfindungsgemässen Bearbeitungsscheibe 2, die sowohl an der Oberseite als auch an der Unterseite mit Werkzeugbereichen versehen ist, kann der Benutzer außerdem durch Wenden der Bearbeitungsscheibe 2 die auf der anderen Seite der Bearbeitungsscheibe 2 angeordneten Werkzeuge nutzen.

Die Bearbeitungsscheibe 2 und die Abdeckscheibe 3 bilden zusammen die Bearbeitungseinrichtung des Zerkleinerers 14, die durch die Antriebswelle 13 rotierend angetrieben wird. Wenn Verarbeitungsgut von der Oberseite des Zerkleinerers 14 aus eingefüllt wird, wird das Verarbeitungsgut durch dasjenige Werkzeug, dass durch die Aussparung 7 frei zugänglich ist, erfasst und zerkleinert. Das zerkleinerte Verarbeitungsgut wird im Gehäuse 15 des Zerkleinerers 14 aufgefangen. Zur leichteren Handhabung weist der Zerkleinerer 14 einen Griff 16 auf.

Bisher war das Zusammenwirken zwischen Bearbeitungsscheibe 2 und Abdeckscheibe 3 am Beispiel eines Zerkleinerers dargestellt worden. Dieses Konzept ist immer dann einsetzbar, wenn ein Verarbeitungsgut mithilfe von Bearbeitungsscheiben zerkleinert wird. Dies kann beispielsweise in einem Durchlaufschnitzler der Fall sein, bei dem das Verarbeitungsgut im steten Durchfluss durch den Durchlaufschnitzler geführt und durch die rotierenden Bearbeitungsscheiben zerkleinert wird. Darüber hinaus ist die Einheit aus Bearbeitungsscheibe und Abdeckscheibe auch in einer Küchenmaschine einsetzbar, die ein entsprechendes Zubehörteil umfasst. Außerdem kann die Erfindung in einer ganzen Reihe von weiteren Hobel-, Reibe- oder Schnitzelvorrichtung eingesetzt werden.

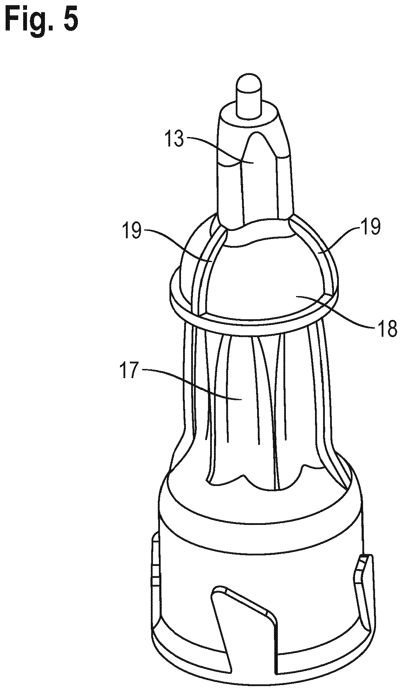

In Figur 5 ist die Antriebsvorrichtung des in Figur 4 gezeigten Zerkleinerers 14 vergrößert herausgezeichnet. Die Antriebsvorrichtung umfasst einen Antriebsschaft 17, an dessen oberem Ende ein halbkugelförmiges Lager 18 ausgebildet ist, auf dem die Bearbeitungsscheibe 2 so gelagert werden kann, dass sie gegenüber der Horizontalen um einen gewissen Winkel verkippbar ist. An den Seiten des halbkugelförmigen Lagers 18 sind drei in Längsrichtung verlaufende Rippen 19 angeformt. Diese in Längsrichtung verlaufenden Rippen 19 sind dazu ausgebildet, in entsprechende Nuten 20 der Bearbeitungsscheibe 2 einzugreifen, um die Bearbeitungsscheibe 2 auch in ihrer verkippten Position erfassen zu können. Im oberen Bereich der Antriebsvorrichtung geht der Antriebsschaft 17 in die Antriebswelle 13 über. Die Antriebswelle 13 weist zumindest abschnittsweise ein Passungsprofil auf, das im Beispiel von Figur 5 als dreieckiges Passungsprofil mit abgerundeten Ecken ausgebildet ist. Nachdem die Bearbeitungsscheibe 2 auf das halbkugelförmige Lager 18 aufgesetzt ist, kann die Abdeckscheibe 3 mit der Passungsaufnahme 8 von oben auf die Antriebswelle 13 aufgesteckt werden, wobei das Passungsprofil der Antriebswelle 13 in die hierzu komplementär ausgebildete Passungsaufnahme 8 der Abdeckscheibe 3 formschlüssig eingreift. Auf diese Weise wird die Abdeckscheibe 3 von der Antriebswelle 13 erfasst und kann von der Antriebswelle 13 rotierend angetrieben werden.

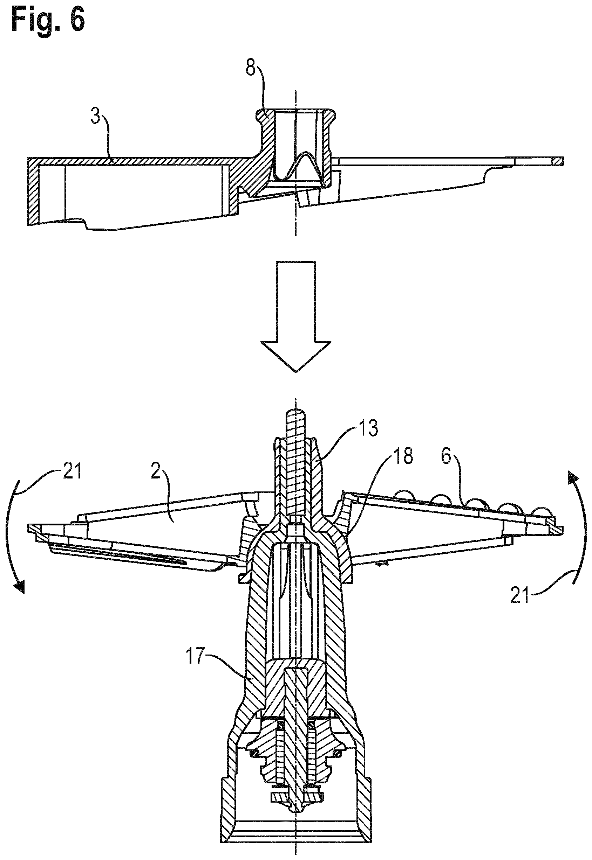

In Figur 6 ist der Zusammenbau des Zerkleinerers 14 im Überblick gezeigt. Es ist zu erkennen, dass die Bearbeitungsscheibe 2 auf das halbkugelförmige Lager 18 am oberen Ende des Antriebsschafts 17 aufgesetzt ist. Dabei wird durch das halbkugelförmige Lager 18 und die entsprechende Aufnahme auf Seiten der Bearbeitungsscheibe 2 ein Kugelgelenk ausgebildet, dass ein Verkippen der Bearbeitungsscheibe 2 relativ zur Horizontalen um einen bestimmten Winkel ermöglicht. Dabei wird durch die Rippen 19, welche in die entsprechenden Nuten 20 in der Aufnahme der Bearbeitungsscheibe 2 eingreifen, eine Führung beim Verkippen der Bearbeitungsscheibe 2 relativ zur Antriebsvorrichtung bereitgestellt. Durch den Eingriff zwischen den Rippen 19 und den zugehörigen Nuten 20 wird ein Verdrehen der Bearbeitungsscheibe 2 relativ zum Antriebsschaft 17 verhindert.

Als nächstes wird die Abdeckscheibe 3 in einer von drei möglichen Winkelpositionen auf die Antriebswelle 13 am oberen Ende der Antriebsvorrichtung aufgesteckt, wobei das Passungsprofil der Antriebswelle 13 in die hierzu komplementär geformte Passungsaufnahme 8 der Abdeckscheibe 3 eingreift. Durch die jeweilige Position der Abdeckscheibe 3 und damit insbesondere auch der Aussparung 7 relativ zur Bearbeitungsscheibe 2 wird einer der Sektoren der Bearbeitungsscheibe 2 sowie das zugehörige Werkzeug ausgewählt, welches dann durch die Aussparung 7 hindurch freigelegt ist. In dem in Figur 6 gezeigten Beispiel ist die Abdeckscheibe 3 relativ zur Bearbeitungsscheibe 2 so orientiert, dass der Sektor 6 ausgewählt wird. Beim Aufstecken der Abdeckscheibe 3 gerät der Sektor 6 in Eingriff mit der Aussparung 7, wodurch die Bearbeitungsscheibe 2 insgesamt in Richtung der Pfeile 21 verkippt wird. Dadurch wird der ausgewählte Sektor 6 um den Winkel ϕ in die Horizontale gekippt, wohingegen die beiden nicht benötigten Sektoren 4 und 5 aus der Bearbeitungsebene weggedreht werden.

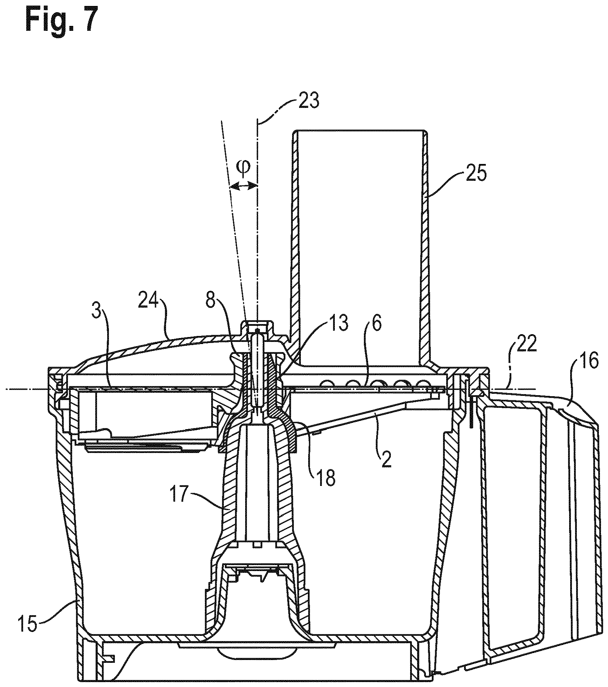

In Figur 7 ist der gesamte Zerkleinerer nach dem Aufstecken der Bearbeitungsscheibe 2 und der Abdeckscheibe 3 im Längsschnitt gezeigt. In Figur 7 ist der Antriebsschaft 17 mit dem halbkugelförmigen Lager 18 zu erkennen, auf das die Bearbeitungsscheibe 2 aufgesteckt ist, wobei die Bearbeitungsscheibe 2 relativ zur Horizontalen um den Winkel ϕ verkippt ist. Außerdem ist die Abdeckscheibe 3 zu erkennen, die mit ihrer Passungsaufnahme 8 auf die Antriebswelle 13 aufgesteckt ist. Durch die Aussparung 7 der Abdeckscheibe 3 wird der Sektor 6 erfasst und in die horizontale Bearbeitungsebene 22 gedreht, wobei die gesamte Bearbeitungsscheibe 2 durch die Abdeckscheibe 3 in eine verkippte Position gedrückt wird, die um einen Winkel ϕ gegenüber der Horizontalen verkippt ist. Eine derartige Verkippung der Bearbeitungsscheibe 2 wird durch die Lagerung der Bearbeitungsscheibe 2 auf dem halbkugelförmigen Lager 18 ermöglicht. Die Gesamtheit aus der Bearbeitungsscheibe 2 und der Abdeckscheibe 3 kann durch die Antriebsvorrichtung um die Drehachse 23 in eine Rotation mit einer bestimmten Umdrehungsgeschwindigkeit versetzt werden, sodass das freiliegende Werkzeug des Sektors 6 rotierend umläuft.

In Figur 7 ist außerdem das Gehäuse 15 mit dem Griff 16 zu erkennen. Darüber hinaus ist in Figur 7 der Deckel 24 der Zerkleinerungsvorrichtung mit dem Einfüllschacht 25 zu erkennen, wobei durch den Einfüllschacht 25 hindurch das zu zerkleinernde Verarbeitungsgut eingefüllt wird, also beispielsweise die zu zerkleinernden Nahrungsmittel. Die über den Einfüllschacht 25 eingefüllten Nahrungsmittel werden durch das rotierend umlaufende freiliegende Werkzeug des Sektors 6 der Bearbeitungsscheibe 2 erfasst und zerkleinert, wobei das zerkleinerte Verarbeitungsgut im Gehäuse 15 aufgefangen wird.

Durch die Positionierung der Abdeckscheibe 3 relativ zur Bearbeitungsscheibe 2 wird eine einfache Auswahl des jeweils benötigten Werkzeugs ermöglicht. Dabei kann auf einer einzigen Bearbeitungsscheibe 2 eine Mehrzahl von unterschiedlichen Werkzeugen zur Verfügung gestellt werden, aus denen der Benutzer das jeweils benötigte Werkzeug durch geeignete Positionierung der Abdeckscheibe 3 auswählen kann. Ein Wechsel des Werkzeugs ist durch Verändern der Position der Abdeckscheibe 3 relativ zur Bearbeitungsscheibe 2 auf einfache Weise möglich.

### BEZUGSZEICHENLISTE

- 1: Bearbeitungseinrichtung
- 2: Bearbeitungsscheibe
- 3: Abdeckscheibe
- 4, 5, 6: Sektoren an der Oberseite der Bearbeitungsscheibe 2
- 7: Aussparung in der Abdeckscheibe 3
- 8: Passungsaufnahme
- 9, 10, 11: Sektoren an der Unterseite der Bearbeitungsscheibe 2
- 12: Reibzacken
- 13: Antriebswelle
- 14: Zerkleinerer
- 15: Gehäuse
- 16: Griff
- 17: Antriebsschaft
- 18: halbkugelförmiges Lager für Bearbeitungsscheibe 2
- 19: Rippen
- 20: Nuten
- 21: Pfeile
- 22: Bearbeitungsebene
- 23: Drehachse
- 24: Deckel
- 25: Einfüllschacht

## Patentansprüche

1. Eine Bearbeitungseinrichtung (1) zum Zerkleinern von Verarbeitungsgut, welche aufweist
eine Bearbeitungsscheibe (2) mit einer Mehrzahl von unterschiedlichen Werkzeugbereichen,
eine Abdeckscheibe (3) mit mindestens einer Aussparung (7), wobei die Abdeckscheibe (3) in unterschiedlichen Positionen auf der Bearbeitungsscheibe (2) anordenbar ist,
wobei die Bearbeitungsscheibe (2) in eine Mehrzahl von Sektoren aufgeteilt ist und in jedem der Sektoren unterschiedliche Werkzeuge angeordnet sind,
wobei die Bearbeitungsscheibe (2) und die auf der Bearbeitungsscheibe (2) angeordnete Abdeckscheibe (3) in ihrer jeweiligen Position zueinander eine gemeinsam antreibbare Einheit bilden, wobei in unterschiedlichen Positionen der Abdeckscheibe (3) auf der Bearbeitungsscheibe (2) unterschiedliche Werkzeugbereiche durch die mindestens eine Aussparung (7) freigelegt sind und jeweils andere Werkzeugbereiche durch die Abdeckscheibe (3) abgedeckt sind,
**dadurch gekennzeichnet, dass**
die Bearbeitungsscheibe (2) als beidseitig verwendbare Bearbeitungsscheibe (2) ausgebildet ist, die auf beiden Seiten Werkzeugbereiche aufweist.

2. Eine Bearbeitungseinrichtung (1) nach Anspruch 1, **dadurch gekennzeichnet, dass** in einer bestimmten Position der Abdeckscheibe (3) auf der Bearbeitungsscheibe (2) mindestens ein erster Werkzeugbereich durch die mindestens eine Aussparung (7) freigelegt ist und zum Zerkleinern des Verarbeitungsguts einsetzbar ist und mindestens ein anderer Werkzeugbereich durch die Abdeckscheibe (3) abgedeckt ist und zur Zerkleinerung des Verarbeitungsguts nicht beiträgt.

3. Eine Bearbeitungseinrichtung (1) nach einem der Ansprüche 1 oder 2, **dadurch gekennzeichnet, dass** die Abdeckscheibe (3) und die Bearbeitungsscheibe (2) in ihrer jeweiligen Position miteinander in Eingriff stehen.

4. Eine Bearbeitungseinrichtung (1) nach einem der Ansprüche 1 bis 3, **dadurch gekennzeichnet, dass** die Einheit aus der Bearbeitungsscheibe (2) und der Abdeckscheibe (3) rotierend antreibbar ist.

5. Eine Zerkleinerungsvorrichtung zum Zerkleinern von Verarbeitungsgut, welche aufweist:
eine Bearbeitungsscheibe (2) mit einer Mehrzahl von unterschiedlichen Werkzeugbereichen,
eine Abdeckscheibe (3) mit mindestens einer Aussparung (7), wobei die Abdeckscheibe (3) in unterschiedlichen Positionen auf der Bearbeitungsscheibe (2) anordenbar ist,
wobei die Bearbeitungsscheibe (2) in eine Mehrzahl von Sektoren aufgeteilt ist und in jedem der Sektoren unterschiedliche Werkzeuge angeordnet sind,
wobei in unterschiedlichen Positionen der Abdeckscheibe (3) auf der Bearbeitungsscheibe (2) unterschiedliche Werkzeugbereiche durch die mindestens eine Aussparung (7) freigelegt sind und jeweils andere Werkzeugbereiche durch die Abdeckscheibe (3) abgedeckt sind,
wobei die Bearbeitungsscheibe (2) als beidseitig verwendbare Bearbeitungsscheibe (2) ausgebildet ist, die auf beiden Seiten Werkzeugbereiche aufweist, und mit
einer Antriebswelle (13), die dazu ausgebildet ist, die Bearbeitungsscheibe (2) und die auf der Bearbeitungsscheibe (2) angeordnete Abdeckscheibe (3) gemeinsam anzutreiben.

6. Eine Zerkleinerungsvorrichtung nach Anspruch 5, **dadurch gekennzeichnet, dass** mindestens eine von der Bearbeitungsscheibe (2) und der Abdeckscheibe (3) eine Passungsaufnahme (8) für die Antriebswelle (13) aufweist, mit der die Einheit aus der Bearbeitungsscheibe (2) und der Abdeckscheibe (3) rotierbar antreibbar ist.

7. Eine Zerkleinerungsvorrichtung nach einem der Ansprüche 5 oder 6, **dadurch gekennzeichnet, dass** die Abdeckscheibe (3) in vordefinierten Winkelpositionen auf die Bearbeitungsscheibe (2) aufsetzbar ist.

8. Eine Zerkleinerungsvorrichtung nach Anspruch 7, **dadurch gekennzeichnet, dass** die vordefinierten Winkelpositionen bei einer Positionierung der Abdeckscheibe (3) auf der Bearbeitungsscheibe (2) durch ein Passungsprofil der Antriebswelle (13) vorgegeben sind, das in eine Passungsaufnahme (8) der Abdeckscheibe (3) eingreift.

9. Eine Zerkleinerungsvorrichtung nach einem der Ansprüche 5 bis 8, **dadurch gekennzeichnet, dass** die Werkzeugbereiche als Bearbeitungsflächen ausgebildet sind, wobei die Bearbeitungsflächen von der Mitte zum Rand der Bearbeitungsscheibe (2) hin schräg abfallend verlaufen.

10. Eine Zerkleinerungsvorrichtung nach einem der Ansprüche 5 bis 9, **dadurch gekennzeichnet, dass** die Antriebswelle (13) als Fortsetzung eines Antriebsschafts (17) ausgebildet ist, der einen größeren Durchmesser als die Antriebswelle (13) aufweist.

11. Eine Zerkleinerungsvorrichtung nach einem der Ansprüche 5 bis 10, **dadurch gekennzeichnet, dass** an der Antriebswelle (13) eine umlaufende gewölbte Lagerfläche (18) ausgebildet ist, auf der die Bearbeitungsscheibe (2) verkippbar gelagert ist.

12. Eine Zerkleinerungsvorrichtung nach einem der Ansprüche 5 bis 11, **dadurch gekennzeichnet, dass** die Bearbeitungsscheibe (2) dazu ausgebildet ist, bei einer Positionierung der Abdeckscheibe (3) auf der Bearbeitungsscheibe (2) so verkippt zu werden, dass nur ein durch die mindestens eine Aussparung (7) freigelegter Werkzeugbereich in einer Bearbeitungsebene (22) zu liegen kommt und jeweils andere Werkzeugbereiche durch die Verkippung aus der Bearbeitungsebene (22) herausgedreht werden.

13. Verfahren zum Auswählen mindestens eines Werkzeugbereichs bei einer Bearbeitungseinrichtung (1) zum Zerkleinern von Verarbeitungsgut, wobei die Bearbeitungseinrichtung (1) eine Bearbeitungsscheibe (2) mit einer Mehrzahl von unterschiedlichen Werkzeugbereichen und eine Abdeckscheibe (3) mit mindestens einer Aussparung (7) aufweist, wobei die Bearbeitungsscheibe (2) in eine Mehrzahl von Sektoren aufgeteilt ist und in jedem der Sektoren unterschiedliche Werkzeuge angeordnet sind und als beidseitig verwendbare Bearbeitungsscheibe (2) ausgebildet ist, die auf beiden Seiten Werkzeugbereiche aufweist, und wobei die Abdeckscheibe (3) in unterschiedlichen Positionen auf der Bearbeitungsscheibe (2) anordenbar ist, und wobei das Verfahren umfasst:
Aufsetzen der Abdeckscheibe (3) auf die Bearbeitungsscheibe (2) in einer Position dergestalt, dass der mindestens eine Werkzeugbereich durch die mindestens eine Aussparung (7) freigelegt ist und mindestens ein anderer Werkzeugbereich durch die Abdeckscheibe (3) abgedeckt ist,
rotierendes Antreiben der Bearbeitungsscheibe (2) und der Abdeckscheibe (3).

## Claims

1. A processing device (1) for chopping up material to be processed, which has
a processing disk (2) with a plurality of different tool regions,
a cover disk (3) with at least one recess (7), wherein the cover disk (3) can be arranged in different positions on the processing disk (2),
wherein the processing disk (2) is divided into a plurality of sectors and different tools are arranged in each of the sectors,
wherein the processing disk (2) and the cover disk (3) arranged on the processing disk (2) form a jointly drivable unit in their respective position relative to one another, wherein in different positions of the cover disk (3) on the processing disk (2) different tool regions are exposed through the at least one recess (7) and other tool regions are respectively covered by the cover disk (3),
**characterised in that**
the processing disk (2) is designed as a processing disk (2), both sides of which can be used and which has tool regions on both sides.

2. A processing device (1) according to claim 1, **characterised in that** in a specific position of the cover disk (3) on the processing disk (2) at least one first tool region is exposed through the at least one recess (7) and can be used for chopping up the material to be processed and at least one other tool region is covered by the cover disk (3) and does not contribute to the chopping up of the material to be processed.

3. A processing device (1) according to one of claims 1 or 2, **characterised in that** the cover disk (3) and the processing disk (2) are in engagement with one another in their respective position.

4. A processing device (1) according to one of claims 1 to 3, **characterised in that** the unit consisting of the processing disk (2) and the cover disk (3) can be driven in rotation.

5. A chopping device for chopping up material to be processed, which has:
a processing disk (2) with a plurality of different tool regions,
a cover disk (3) with at least one recess (7), wherein the cover disk (3) can be arranged in different positions on the processing disk (2),
wherein the processing disk (2) is divided into a plurality of sectors and different tools are arranged in each of the sectors,
wherein in different positions of the cover disk (3) on the processing disk (2) different tool regions are exposed through the at least one recess (7) and other tool regions are respectively covered by the cover disk (3),
wherein the processing disk (2) is designed as a processing disk (2), both sides of which can be used and which has tool regions on both sides, and with
a drive shaft (13) which is designed to jointly drive the processing disk (2) and the cover disk (3) arranged on the processing disk (2).

6. A chopping device according to claim 5, **characterised in that** at least one of the processing disk (2) and the cover disk (3) has a fitting receptacle (8) for the drive shaft (13), with which the unit consisting of the processing disk (2) and the cover disk (3) can be driven in rotation.

7. A chopping device according to one of claims 5 or 6, **characterised in that** the cover disk (3) can be placed onto the processing disk (2) in predefined angular positions.

8. A chopping device according to claim 7, **characterised in that** the predefined angular positions when the cover disk (3) is positioned on the processing disk (2) are specified by a fitting profile of the drive shaft (13) which engages into a fitting receptacle (8) of the cover disk (3).

9. A chopping device according to one of claims 5 to 8, **characterised in that** the tool regions are designed as processing surfaces, wherein the processing surfaces slope down from the centre to the edge of the processing disk (2).

10. A chopping device according to one of claims 5 to 9, **characterised in that** the drive shaft (13) is designed as a continuation of a drive shaft (17) which has a larger diameter than the drive shaft (13).

11. A chopping device according to one of claims 5 to 10, **characterised in that** a circumferential curved bearing surface (18) is formed on the drive shaft (13), on which the processing disk (2) is tiltably mounted.

12. A chopping device according to one of claims 5 to 11, **characterised in that** the processing disk (2) is designed to be tilted when the cover disk (3) is positioned on the processing disk (2), such that only one tool region exposed through the at least one recess (7) comes to rest in a processing plane (22) and other tool regions are respectively rotated out of the processing plane (22) by the tilting.

13. Method for selecting at least one tool region in a processing device (1) for chopping up material to be processed, wherein the processing device (1) has a processing disk (2) with a plurality of different tool regions and a cover disk (3) with at least one recess (7), wherein the processing disk (2) is divided into a plurality of sectors and different tools are arranged in each of the sectors, and is designed as a processing disk (2), both sides of which can be used and which has tool regions on both sides, and wherein the cover disk (3) can be arranged in different positions on the processing disk (2), and wherein the method comprises:
placing the cover disk (3) onto the processing disk (2) in a position such that the at least one tool region is exposed through the at least one recess (7) and at least one other tool region is covered by the cover disk (3),
rotational driving of the processing disk (2) and the cover disk (3).

## Revendications

1. Dispositif de traitement (1) destiné au broyage de produit manufacturé, qui présente
un disque de traitement (2) avec une pluralité de zones d'outil différentes,
un disque de recouvrement (3) avec au moins une cavité (7), dans lequel le disque de recouvrement (3) peut être disposé dans des positions différentes sur le disque de traitement (2),
dans lequel le disque de traitement (2) est partagé en une pluralité de secteurs et des outils différents sont disposés dans chacun des secteurs,
dans lequel le disque de traitement (2) et le disque de recouvrement (3) disposé sur le disque de traitement (2) forment dans leur position l'un par rapport à l'autre une unité qui peut être entraînée de manière conjointe, dans lequel dans des positions différentes du disque de recouvrement (3) sur le disque de traitement (2) des zones d'outil différentes sont libérées par le biais de l'au moins une cavité (7) et respectivement d'autres zones d'outil sont recouvertes par le biais du disque de recouvrement (3),
**caractérisé en ce que** le disque de traitement (2) est réalisé en tant que disque de traitement utilisable sur les deux faces (2) qui présente des zones d'outil sur les deux faces.

2. Dispositif de traitement (1) selon la revendication 1, **caractérisé en ce que** dans une position déterminée du disque de recouvrement (3) sur le disque de traitement (2) au moins une première zone d'outil est libérée par le biais de l'au moins une cavité (7) et peut être utilisée pour le broyage du produit manufacturé et au moins une autre zone d'outil est recouverte par le biais du disque de recouvrement (3) et ne contribue pas au broyage du produit manufacturé.

3. Dispositif de traitement (1) selon l'une quelconque des revendications 1 ou 2, **caractérisé en ce que** le disque de recouvrement (3) et le disque de traitement (2) sont en prise l'un avec l'autre dans leur position respective.

4. Dispositif de traitement (1) selon l'une quelconque des revendications 1 à 3, **caractérisé en ce que** l'unité formée par le disque de traitement (2) et le disque de recouvrement (3) peut être entraînée en rotation.

5. Dispositif de broyage destiné au broyage de produit manufacturé, qui présente :
un disque de traitement (2) avec une pluralité de zones d'outil différents,
un disque de recouvrement (3) avec au moins une cavité (7), dans lequel le disque de recouvrement (3) peut être disposé dans des positions différentes sur le disque de traitement (2),
dans lequel le disque de traitement (2) est partagé en une pluralité de secteurs et des outils différents sont disposés dans chacun des secteurs,
dans lequel dans des positions différentes du disque de recouvrement (3) sur le disque de traitement (2) des zones d'outil différentes sont libérées par le biais de l'au moins une cavité (7) et respectivement d'autres zones d'outil sont recouvertes par le biais du disque de recouvrement (3),
dans lequel le disque de traitement (2) est réalisé en tant que disque de traitement (2) utilisable sur les deux faces qui présente des zones d'outil sur les deux faces et avec un arbre d'entraînement (13) qui est réalisé pour entraîner de manière conjointe le disque de traitement (2) et le disque de recouvrement (3) disposé sur le disque de traitement (2).

6. Dispositif de broyage selon la revendication 5, **caractérisé en ce qu'**au moins un du disque de traitement (2) et du disque de recouvrement (3) présente un logement d'adaptation (8) pour l'arbre d'entraînement (13) avec lequel l'unité formée par le disque de traitement (2) et le disque de recouvrement (3) peut être entraînée en rotation.

7. Dispositif de broyage selon l'une quelconque des revendications 5 ou 6, **caractérisé en ce que** le disque de recouvrement (3) peut être posé sur le disque de traitement (2) dans des positions angulaires prédéfinies.

8. Dispositif de broyage selon la revendication 7, **caractérisé en ce que** les positions angulaires prédéfinies sont prédéterminées lors d'un positionnement du disque de recouvrement (3) sur le disque de traitement (2) par le biais d'un profil d'adaptation de l'arbre d'entraînement (13) qui se met en prise dans un logement d'adaptation (8) du disque de recouvrement (3).

9. Dispositif de broyage selon l'une quelconque des revendications 5 à 8, **caractérisé en ce que** les zones d'outil sont réalisées en tant que surfaces de traitement, dans lequel les surfaces de traitement s'étendent de manière inclinée en biseau du milieu vers la périphérie du disque de traitement (2).

10. Dispositif de broyage selon l'une quelconque des revendications 5 à 9, **caractérisé en ce que** l'arbre d'entraînement (13) est réalisé en tant que prolongement d'un arbre d'un entraînement (17) qui présente un diamètre plus grand que l'arbre d'entraînement (13).

11. Dispositif de broyage selon l'une quelconque des revendications 5 à 10, **caractérisé en ce qu'**une surface de palier (18) bombée périphérique est réalisée au niveau de l'arbre d'entraînement (13), sur laquelle le disque de traitement (2) est logé de manière basculante.

12. Dispositif de broyage selon l'une quelconque des revendications 5 à 11, **caractérisé en ce que** le disque de traitement (2) est réalisé pour être basculé lors d'un positionnement du disque de recouvrement (3) sur le disque de traitement (2) de sorte que seule une zone d'outil libérée par le biais de l'au moins une cavité (7) vient à se trouver dans un plan de traitement (22) et respectivement d'autres zones d'outil sont sorties du plan de traitement (22) par le biais du basculement.

13. Procédé destiné à la sélection d'au moins une zone d'outil dans un dispositif de traitement (1) destiné au broyage de produit manufacturé, dans lequel le dispositif de traitement (1) présente un disque de traitement (2) avec une pluralité de zones d'outil différentes et un disque de recouvrement (3) avec au moins une cavité (7), dans lequel le disque de traitement (2) est partagé en une pluralité de secteurs et des outils différents sont disposés dans chacun des secteurs et le disque de traitement (2) est réalisé en tant que disque de traitement (2) utilisable sur les deux faces qui présente des zones d'outil sur les deux faces, et dans lequel le disque de recouvrement (3) peut être disposé dans des positions différentes sur le disque de traitement (2) et dans lequel le procédé comprend :
la pose du disque de recouvrement (3) sur le disque de traitement (2) dans une position de telle manière que l'au moins une zone d'outil est libérée par le biais de l'au moins une cavité (7) et au moins une autre zone d'outil est recouverte par le biais du disque de recouvrement (3),
l'entraînement en rotation du disque de traitement (2) et du disque de recouvrement (3).
